# FASCICULE DE BREVET EUROPEEN

(11) **EP 3 222 484 B1**
(45) Date de publication et mention de la délivrance du brevet: **26.12.2018**
(21) Numéro de dépôt: 17162636.9
(22) Date de dépôt: 23.03.2017
(51) Int. Cl.: B61D 17/02, B61F 3/12, B61F 3/14

(54) **CARÉNAGE POUR UN BOGIE D'UN VÉHICULE FERROVIAIRE ARTICULÉ ET VÉHICULE FERROVIAIRE ARTICULÉ COMPRENANT UN BOGIE POURVU D'UN TEL CARÉNAGE**
VERKLEIDUNG FÜR FAHRGESTELL EINES MIT GELENKEN AUSGESTATTETEN SCHIENENFAHRZEUGS, UND MIT GELENKEN AUSGESTATTETES SCHIENENFAHRZEUG, DAS EIN SOLCHES FAHRGESTELL MIT EINER SOLCHEN VERKLEIDUNG UMFASST
FAIRING FOR AN ARTICULATED RAILWAY VEHICLE BOGIE AND ARTICULATED RAILWAY VEHICLE COMPRISING A BOGIE PROVIDED WITH SUCH A FAIRING

(30) Priorité: 24.03.2016 FR 1652538
(43) Date de publication de la demande: 27.09.2017
(73) Titulaire: ALSTOM Transport Technologies, 93400 Saint-Ouen (FR)
(72) Inventeur: DO, Huu-Thi, 17300 ROCHEFORT (FR)
(74) Mandataire: Lavoix

(56) Documents cités:
- EP-A1- 0 057 765
- WO-A1-2010/086201
- WO-A1-2014/206643
- DE-A1-102010 061 718
- DE-C- 726 181
- JP-A- H09 226 561

## Description

L'invention concerne un carénage pour un bogie d'un véhicule ferroviaire articulé. L'invention concerne également un véhicule ferroviaire articulé comportant un bogie muni d'un tel carénage.

On connait des véhicules ferroviaires, tels que des trains de passagers et à grande vitesse, dont les bogies sont chacun pourvus d'un carénage, ce qui permet d'améliorer les propriétés aérodynamiques du véhicule. Chaque carénage comporte typiquement une paroi de fond et des parois latérales, généralement rigides, qui recouvrent au moins une partie inférieure du bogie auquel il est associé. Cela permet en particulier de limiter les perturbations de l'écoulement d'air qui circule sous le véhicule ferroviaire lorsque celui-ci se déplace à une vitesse élevée. Les performances de fonctionnement du véhicule sont ainsi améliorées. WO 2014/206643 A1 divulgue un exemple d'un carénage connu pour un bogie d'un véhicule ferroviaire conforme au préambule de la revendication 1.

Ces carénages connus ont cependant pour inconvénient de ne pas être compatibles avec des véhicules ferroviaires articulés dans lequel des bogies sont situés au niveau des articulations, entre des caisses de ce véhicule. C'est par exemple le cas des bogies de type Jacobs. Par exemple, un bogie est situé au niveau d'une articulation entre des première et deuxième caisses du véhicule, de sorte que chacune de ces première et deuxième caisses repose au moins en partie sur le bogie. Dans ce cas, la rigidité du carénage empêche les mouvements des caisses l'une par rapport à l'autre au niveau de l'articulation lorsque le véhicule se déplace.

C'est à ces inconvénients qu'entend plus particulièrement remédier l'invention, en proposant un carénage pour un bogie d'un véhicule ferroviaire articulé qui soit utilisable avec des bogies placés au niveau de l'articulation entre les caisses du véhicule ferroviaire.

A cet effet, l'invention concerne un carénage pour un bogie d'un véhicule ferroviaire articulé, ce carénage comportant :
- une paroi de fond et des parois latérales aptes à entourer au moins une partie inférieure d'un bogie, et
- des première et deuxième zones d'ancrage chacune apte à être fixée à une extrémité, respectivement, d'une première caisse et d'une deuxième caisse d'un véhicule ferroviaire articulées l'une par rapport à l'autre, dans une configuration où ces première et deuxième caisses reposent au moins en partie sur le bogie, le carénage comportant un raccord flexible qui relie mécaniquement la première zone d'ancrage et la deuxième zone d'ancrage et qui autorise un déplacement de ces première et deuxième zones d'ancrage l'une par rapport à l'autre.

Grâce à l'invention, le raccord flexible autorise le déplacement de la première zone d'ancrage du carénage fixée à la première caisse par rapport à la deuxième zone d'ancrage du carénage fixée à la deuxième caisse du véhicule. Les première et deuxième caisses peuvent se déplacer l'une par rapport à l'autre, lors du fonctionnement du véhicule et ce sans endommager ni être gêné dans leur mouvement par le carénage.

Selon des aspects avantageux mais non obligatoires de l'invention, un tel carénage peut incorporer une ou plusieurs des caractéristiques suivantes, prises dans toute combinaison techniquement admissible :
- Le raccord flexible comporte un matériau élastomère, de préférence sous forme de bloc ou de bande.
- Le carénage est fixé sans degré de liberté au bogie, les première et deuxième zones d'ancrage sont ménagées directement sur le raccord flexible et le raccord flexible s'étend sur des portions périphériques du carénage.
- Le carénage est partagé entre une portion centrale fixée au bogie, et des première et deuxième portions périphériques, les première et deuxième zones d'ancrage sont ménagées sur les première et deuxième portions périphériques et le raccord flexible s'étend entre la portion centrale et chacune des première et deuxième portions périphériques et relie la portion centrale à chacune des première et deuxième portions périphériques.
- Le carénage est partagé en une portion avant et une portion arrière, les première et deuxième zones d'ancrage sont ménagées sur les première et deuxième portions et le raccord flexible s'étend entre les portions avant et arrière et relie ces portions avant et arrière entre elles.
- Le carénage est réalisé en un matériau rigide, tel que du métal ou un matériau composite ou du Kevlar.
- Le carénage comporte des ouvertures autorisant le passage d'éléments du bogie.
- Le raccord flexible est fixé au carénage au moyen d'éléments de fixation traversants, tels que des boulons.
- Le raccord flexible est fixé au carénage par serrage, par exemple au moyen d'une mâchoire ménagée sur le carénage.

Selon un autre aspect, l'invention concerne également un véhicule ferroviaire articulé comportant :
- des première et deuxième caisses articulées l'une par rapport à l'autre,
- un bogie sur lequel reposent au moins en partie les première et deuxième caisses,
- un carénage du bogie, comprenant :
   ∘ une paroi de fond et des parois latérales entourant au moins une partie inférieure du bogie, et
   ∘ des zones d'ancrage, chacune fixée à une extrémité, respectivement, de la première caisse et de la deuxième caisse, ces première et deuxième caisses reposant au moins en partie sur le bogie.

Le carénage de ce véhicule est réalisé selon l'invention.

L'invention sera mieux comprise et d'autres avantages de celle-ci apparaitront plus clairement à la lumière de la description qui va suivre, d'un mode de réalisation d'un carénage pour bogie d'un véhicule ferroviaire articulé, donnée uniquement à titre d'exemple et faite en référence aux dessins annexés dans lesquels :
- la figure 1 représente schématiquement, selon une vue en perspective, une portion d'un véhicule ferroviaire articulé comportant un bogie pourvu d'un carénage conforme à l'invention ;
- les figures 2, 3 et 4 représentent schématiquement, selon une vue en perspective, un carénage conforme respectivement à des premier, deuxième et troisième modes de réalisation de l'invention.

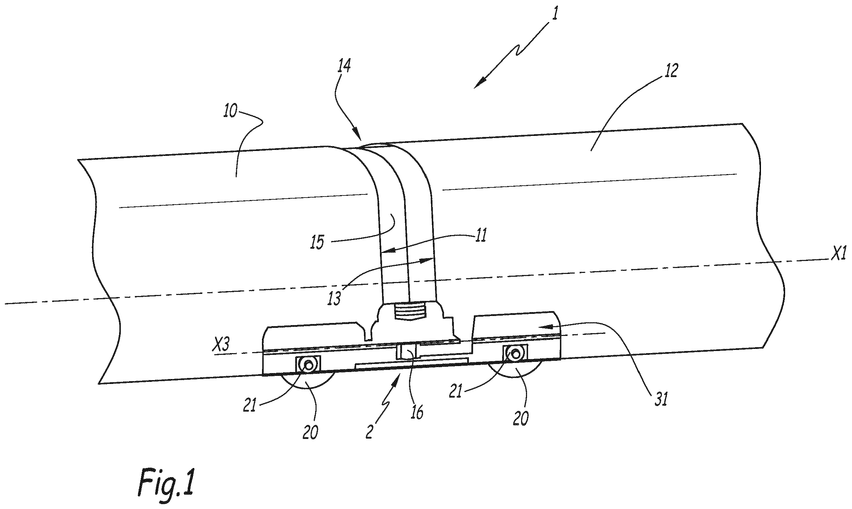

La figure 1 représente une vue partielle d'un véhicule ferroviaire articulé 1. Dans cet exemple, ce véhicule 1 est une rame d'un train à grande vitesse. Le véhicule 1 est apte à circuler sur une voie ferrée, non illustrée, qui s'étend essentiellement le long d'un plan horizontal.

Le véhicule 1 comporte une pluralité de caisses, articulées les unes par rapport aux autres pour former un corps du véhicule 1. Ces caisses sont ici aptes à recevoir des passagers du véhicule 1 et constituent des voitures ferroviaires dans le cas où le véhicule ferroviaire 1 est un train. Ces caisses sont essentiellement alignées les unes avec les autres le long d'un axe longitudinal X1 du véhicule 1. Pour simplifier la figure 1, seules deux caisses 10 et 12 sont illustrées. Dans cette description, les termes « avant » et « arrière » sont définis par rapport à l'axe X1.

Les caisses 10 et 12 sont reliées entre elles, au niveau d'extrémités terminales respectivement notées 11 et 13, par une articulation 14. Les extrémités terminales respectives 11 et 13 des caisses 10 et 12 se font face l'une avec l'autre lorsque les caisses 10 et 12 sont montées articulées sur le bogie 2.

L'articulation 14 comporte ici un soufflet d'articulation 15 ainsi qu'un mécanisme d'articulation 16.

De façon connue, le soufflet d'articulation 15 met en communication l'intérieur des caisses 10 et 12.

Le mécanisme d'articulation 16 relie mécaniquement les caisses 10 et 12 et autorise leur déplacement l'une par rapport à l'autre. Le mécanisme 16 autorise notamment un déplacement latéral limité des caisses 10 et 12 selon une direction essentiellement perpendiculaire à la direction longitudinale et parallèle au plan de la voie. Le mécanisme 16 autorise également une rotation des caisses 10 et 12 l'une par rapport à l'autre autour d'un axe de rotation perpendiculaire à l'axe longitudinal et s'étendant ici selon une direction essentiellement verticale.

Le véhicule 1 comporte en outre plusieurs bogies 2 qui comportent chacun des roues 20 configurées pour rouler sur la voie ferrée et qui sont raccordées à leur bogie 2 respectif au moyen d'essieux 21. Par exemple, le bogie 2 est un bogie de type Jacobs.

Le bogie 2 est fixé aux caisses 10 et 12, par exemple par l'intermédiaire du mécanisme d'articulation 16. Ici, la caisse 10 est située à l'avant du bogie 2, et la caisse 12 est située à l'arrière du bogie 2.

Dans cet exemple, au moins une partie des caisses 10 et 12 repose sur le bogie 2. Par « repose au moins en partie », on entend ici qu'au moins 20%, de préférence au moins 40%, du poids de chaque caisse 10, 12 est exercé sur le bogie 2.

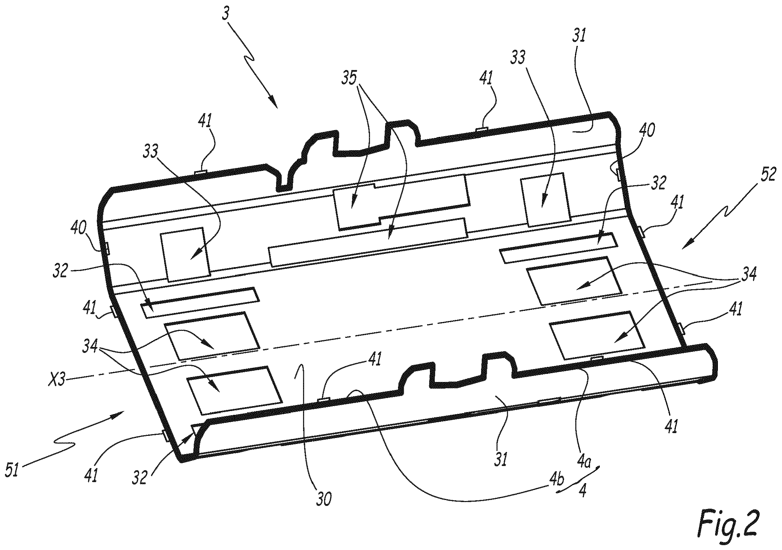

Le véhicule 1 comporte en outre un carénage 3 de protection du bogie 2. Comme illustré à la figure 2, le carénage 3 comporte une paroi de fond 30 et des parois latérales 31. Le carénage 3 entoure au moins partiellement une partie inférieure du bogie 2 lorsqu'il est dans une configuration montée sur le bogie 2.

La paroi de fond 30 présente une forme essentiellement plane et s'étend selon un axe longitudinal X3 du carénage 3. L'axe longitudinal X3 est parallèle à l'axe longitudinal X1 lorsque le carénage 3 est dans une configuration montée sur le bogie 2. La paroi de fond 30 est conformée pour être placée sous une face inférieure du bogie 2. A cet effet, la paroi de fond 30 est pourvue d'ouvertures 32, 34 permettant le passage des roues 20 et/ou d'autres organes mécaniques du bogie 2.

Les parois latérales 31 s'étendent essentiellement verticalement vers le haut depuis la paroi de fond 30. Les parois latérales 31 s'étendent longitudinalement essentiellement parallèlement à l'axe X3. Ici, les parois latérales 31 comportent des ouvertures 33 et 35, pour autoriser, par exemple, le passage des extrémités des essieux 21 ou d'autres organes mécaniques qui dépasseraient latéralement du bogie 2.

Les parois latérales 31 sont ici solidaires avec la paroi de fond 30 et forment une pièce d'un seul tenant. Par exemple, le carénage 3 présente une section transversale essentiellement en forme de U, cette section transversale étant définie perpendiculairement à l'axe longitudinal X3 du carénage 3.

Les parois latérales 31 sont avantageusement conformées pour épouser la forme du bas des caisses 10 et 12. De préférence, les parois latérales 31 sont également conformées pour s'inscrire dans le prolongement des parois latérales extérieures des caisses 10 et 12 lorsque le carénage 3 est monté sur le bogie 2. Par exemple, les caisses 10 et 12 comportent des évidements de formes complémentaires à celles des parois 31, de sorte à ce que le carénage 3 n'engendre pas de surlargeur importante par rapport aux caisses 10 et 12 au niveau de l'articulation, car cela serait préjudiciable aux performances aérodynamiques du véhicule 1.

De préférence, le carénage 3 est réalisé dans un matériau rigide, tel que du métal. En variante, le carénage 3 comporte un matériau composite ou encore du Kevlar (marque déposée) ou un verre haute résistance ou une matière plastique transparente. Ainsi, le carénage 3 joue également un rôle de protection mécanique du bogie 2, par exemple contre des projections de ballast lorsque le véhicule 1 circule à une vitesse élevée.

Le carénage 3 comporte en outre des zones d'ancrage 51, 52. La zone d'ancrage 51 est destinée à être fixée sur l'extrémité 11 de la caisse 10. La zone d'ancrage 52 est destinée à être fixée à l'extrémité 13 de la caisse 12. Chacune des zones d'ancrage 51 et 52 reçoit des systèmes d'attache 41 qui solidarisent le carénage 3 aux caisses 10 et 12, comme expliqué plus en détail dans ce qui suit.

Le carénage 3 comporte en outre un raccord flexible 4 qui relie mécaniquement la zone d'ancrage 51 à la zone d'ancrage 52 et qui autorise un déplacement de ces zones d'ancrage 51 et 52 l'une par rapport à l'autre, par exemple lorsque les caisses 10 et 12 se déplacent l'une par rapport à l'autre grâce à l'articulation 14. Ici, le raccord 4 comporte un matériau élastomère, tel que le matériau utilisé pour la réalisation de « silent-blocs ».

Par « flexible », on entend que le raccord 4 présente une rigidité inférieure à celle du carénage 3. Par exemple, le module de Young du carénage 3 est 10 fois supérieure, de préférence cent fois supérieure, de préférence encore cinq cent fois supérieure au module du Young du raccord 4.

Dans cet exemple, comme illustré à la figure 2, le raccord 4 se présente sous la forme de deux bandes 4A et 4B disposées sur un pourtour extérieur du carénage 3. Ici, la bande 4A s'étend sur des bords extérieurs périphériques des parois latérales 31 et de la paroi de fond 30 ménagés sur une partie arrière du carénage 3. Cette partie arrière du carénage 3 est ici orientée vers l'extrémité 13 de la caisse 12. De façon analogue, la bande 4B s'étend le long de bords extérieurs de la paroi de fond 30 et des parois latérales 31 ménagés sur une partie avant du carénage 3. Cette partie avant du carénage 3 est ici orientée vers l'extrémité 11 de la caisse 10. En variante, les bandes 4A et 4B sont remplacées par une bande unique qui s'étend sur toute la périphérie du bord du carénage 3.

Le raccord 4 est fixé au carénage par un système d'attache 40. Par exemple, le système d'attache 40 comporte des éléments de fixation traversants, tels que des boulons. Le matériau formant le raccord 4 est pourvu d'un trou traversant au travers duquel est inséré un boulon fixé sur une portion du carénage 3 munie d'un perçage correspondant.

En variante, le raccord 4 est fixé au carénage 3 par serrage. Par exemple, le système 40 comporte une mâchoire ménagée sur le carénage 3 et conformée pour serrer et immobiliser le raccord 4.

De préférence, le système d'attache 40 est réversible et autorise un démontage du raccord 4 par rapport au carénage 3, ce qui facilite des opérations de maintenance et/ou de remplacement du carénage 3.

Dans cet exemple, la paroi de fond 30, est fixée directement et sans degré de liberté au bogie 2, non illustré sur la figure 2. La zone d'ancrage 51 est formée par la bande 4B du raccord 4. De façon analogue, la zone d'ancrage 52 est formée par la bande 4A du raccord 4. Les zones d'ancrage 51 et 52 sont ici pourvues chacune d'un système d'attache 41, qui assure leur fixation aux caisses 10, 12. Ce système d'attache 41 est ici analogue au système d'attache 40.

Ainsi, le raccord 4 relie mécaniquement les zones d'ancrage 51 et 52 indirectement par l'intermédiaire de la paroi de fond 30 et des parois latérales 31.

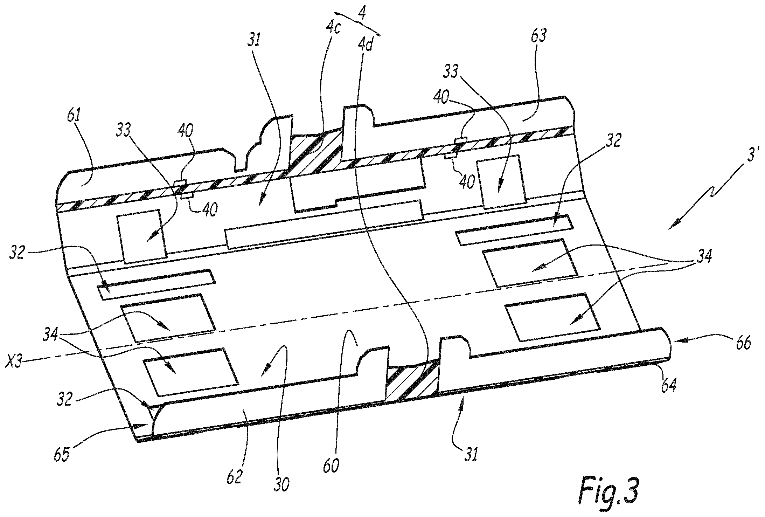

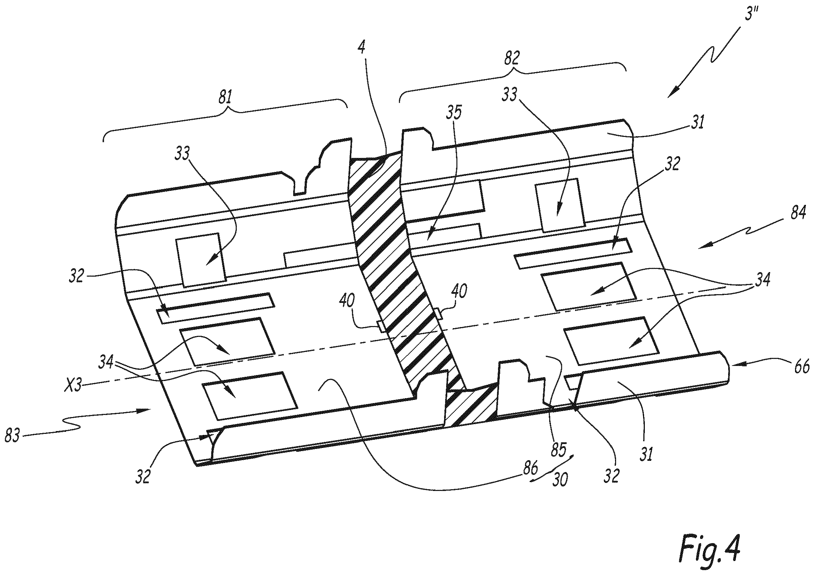

Les figures 3 et 4 représentent des deuxième et troisième modes de réalisation du carénage 3. Dans ces figures 3 et 4, les éléments analogues à ceux du carénage 3 des figures 1 et 2 portent les mêmes références et ne sont pas décrits plus en détail.

La figure 3 représente un carénage 3' suivant un autre mode de réalisation de l'invention. Le carénage 3' est partagé entre une portion centrale 60, qui est fixée sans degré de liberté au bogie 2, et des portions périphériques 61, 62, 63 et 64. Ici, la portion centrale 60 comporte la paroi de fond ainsi qu'une partie des parois latérales 31. Les portions périphériques 61, 62, 63 et 64 forment une autre partie des parois latérales 31. Plus précisément, les portions périphériques 61, 62 sont disposées sur les flancs latéraux de part et d'autre de la paroi de fond 30 d'un même côté avant du carénage 3'. Les portions périphériques 61 et 62 portent chacune une zone d'ancrage 65 qui est tournée vers l'extrémité 11 de la caisse 10 pour fixer solidairement sans degré de liberté ces parties périphériques 61 et 62 à la caisse 10. Les zones d'ancrage 65 jouent le même rôle, vis-à-vis du carénage 3', que la zone d'ancrage 51 du carénage 3. Ici, les zones d'ancrage 65 sont formées par les portions périphériques 61 et 62. La caisse 10 est donc fixée à ces portions périphériques 61 et 62. Le système d'attache 41 n'est donc pas nécessairement ici identique au système d'attache 40.

De façon analogue, les portions périphériques 63 et 64 sont disposées de part et d'autre de la paroi de fond 30 et sur un côté arrière du carénage 3' et sont ainsi opposées aux portions périphériques 61 et 62. Les portions périphériques 63 et 64 comportent chacune une zone d'ancrage 66 qui est tournée vers l'extrémité 13 de la caisse 12. Les zones d'ancrage 66 jouent le même rôle, vis-à-vis du carénage 3', que la zone d'ancrage 52 du carénage 3. Les zones d'ancrage 66 sont formées par les portions périphériques 63 et 64.

L'avant et l'arrière du carénage 3' sont ici définis de la même manière que pour le carénage 3.

Le raccord 4 comporte ici une première partie 4C, et une deuxième partie 4D. La première partie 4C relie la portion centrale 60 aux portions périphériques 61 et 63. Par exemple, la partie 4C se présente sous la forme d'une bande ou d'un bloc qui s'étend longitudinalement sur le long d'un côté du carénage 3' essentiellement parallèlement à l'axe X3. De même, les portions périphériques 62 et 64 sont reliées à la portion centrale 60 par l'intermédiaire de la partie 4D du raccord 4. De façon analogue, le raccord 4D se présente sous la forme d'une bande d'un bloc qui s'étend le long d'un côté du carénage 3' opposé au côté sur lequel s'étend la partie 4C, essentiellement parallèlement à l'axe X3.

En variante, chaque partie 4C ou 4D est partagée en deux sous-parties distinctes, l'une raccordant uniquement la partie périphériques 61 ou 62 à la portion centrale 60 et l'autre raccordant uniquement la portion périphériques 63 ou 64 à la portion centrale 60.

La figure 4 représente un carénage 3" selon un autre mode de réalisation de l'invention. Ce carénage 3" présente une forme analogue au carénage 3. Plus précisément, le carénage 3" est partagé en des portions 81 et 82, respectivement avant et arrière, formant par exemple deux moitiés équivalentes du carénage 3'. L'avant et l'arrière du carénage 3" sont ici définis de la même manière que pour le carénage 3.

Le raccord 4 s'étend entre les portions 81 et 82 le long d'un axe perpendiculaire à l'axe longitudinal X3 et raccorde ces portions l'une à l'autre. Les portions 81 et 82 sont chacune maintenues au raccord 4 grâce au système d'attache 40. La partie 81 comporte une paroi de fond 86 et la portion 82 comporte une paroi de fond 85 qui forment ensemble la paroi de fond 30 du carénage 3". La portion avant 81 comporte la zone d'ancrage 83 à la caisse 10. Cette zone d'ancrage 83 joue, vis-à-vis du carénage 3", le même rôle que la zone d'ancrage 51 vis-à-vis du carénage 3. De façon analogue, la portion arrière 82 comporte une zone d'ancrage 84 à la caisse 12, cette zone d'ancrage 84 jouant le même rôle vis-à-vis du carénage 3" que la zone d'ancrage 52.

Les modes de réalisation et les variantes envisagés ci-dessus peuvent être combinés entre eux pour générer de nouveaux modes de réalisation.

## Revendications

1. Carénage (3 ; 3' ; 3") pour un bogie (2) d'un véhicule ferroviaire (1) articulé, ce carénage comportant :
- une paroi de fond (30) et des parois latérales (31) aptes à entourer au moins une partie inférieure d'un bogie (2), et
- des première et deuxième zones d'ancrage (51, 52 ; 65, 66 ; 83, 84) chacune apte à être fixée à une extrémité (11, 13), respectivement, d'une première caisse (10) et d'une deuxième caisse (12) d'un véhicule ferroviaire articulées l'une par rapport à l'autre, dans une configuration où ces première et deuxième caisses (10, 12) reposent au moins en partie sur le bogie (2),
ce carénage (3 ; 3' ; 3") étant **caractérisé en ce qu'**il comporte un raccord flexible (4) qui relie mécaniquement la première zone d'ancrage (51 ; 65 ; 83) et la deuxième zone d'ancrage (52 ; 66 ; 84) et qui autorise un déplacement de ces première et deuxième zones d'ancrage l'une par rapport à l'autre.

2. Carénage selon la revendication 1, **caractérisé en ce que** le raccord flexible (4) comporte un matériau élastomère, de préférence sous forme de bloc ou de bande.

3. Carénage (3) selon les revendications 1 ou 2, **caractérisé en ce qu'**il est fixé sans degré de liberté au bogie, **en ce que** les première et deuxième zones d'ancrage (51, 52) sont ménagées directement sur le raccord flexible (4) et **en ce que** le raccord flexible s'étend sur des portions périphériques du carénage.

4. Carénage (3') selon les revendications 1 ou 2, **caractérisé en ce qu'**il est partagé entre une portion centrale (60) fixée au bogie (2), et des première (61, 62) et deuxième (63, 64) portions périphériques, **en ce que** les première et deuxième zones d'ancrage (65, 66) sont ménagées sur les première et deuxième portions périphériques et **en ce que** le raccord flexible (4) s'étend entre la portion centrale et chacune des première et deuxième portions périphériques et relie la portion centrale à chacune des première et deuxième portions périphériques.

5. Carénage (3") selon les revendications 1 ou 2, **caractérisé en ce qu'**il est partagé en une portion avant (81) et une portion arrière (82), **en ce que** les première et deuxième zones d'ancrage (83, 84) sont ménagées respectivement sur les portions avant et arrière et **en ce que** le raccord flexible (4) s'étend entre les portions avant et arrière et relie ces portions avant et arrière entre elles.

6. Carénage (3 ; 3' ; 3") selon l'une quelconque des revendications précédentes, **caractérisé en ce que** le carénage est réalisé en un matériau rigide, tel que du métal ou un matériau composite ou du Kevlar, ou un verre haute résistance ou une matière plastique transparente.

7. Carénage (3 ; 3' ; 3") selon l'une quelconque des revendications précédentes, **caractérisé en ce qu'**il comporte des ouvertures (32, 33, 34, 35) autorisant le passage d'éléments du bogie (2).

8. Carénage (3 ; 3' ; 3") selon l'une quelconque des revendications précédentes, **caractérisé en ce que** le raccord flexible (4) est fixé au carénage (3 ; 3' ; 3") au moyen d'éléments de fixation (40) traversants, tels que des boulons.

9. Carénage (3 ; 3' ; 3") selon l'une quelconque des revendications précédentes, **caractérisé en ce que** le raccord flexible (4) est fixé au carénage (3 ; 3' ; 3") par serrage, par exemple au moyen d'une mâchoire (40) ménagée sur le carénage.

10. Véhicule ferroviaire articulé (1), comportant :
- des première (10) et deuxième (12) caisses articulées l'une par rapport à l'autre,
- un bogie (2) sur lequel reposent au moins en partie les première et deuxième caisses,
- un carénage (3 ; 3' ; 3") du bogie, comprenant :
∘ une paroi de fond (30) et des parois latérales (31) entourant au moins une partie inférieure du bogie (2), et
∘ des zones d'ancrage (51, 52 ; 65, 66 ; 83, 84), chacune fixée à une extrémité (11, 13), respectivement, de la première caisse (10) et de la deuxième caisse (12), ces première et deuxième caisses reposant au moins en partie sur le bogie (2),
ce véhicule (1) étant **caractérisé en ce que** le carénage (3 ; 3' ; 3") est selon l'une quelconque des revendications précédentes.

## Patentansprüche

1. Verkleidung (3; 3', 3") für ein Drehgestell (2) eines gelenkigen Schienenfahrzeugs (1), wobei die Verkleidung aufweist:
- eine Bodenwand (30) und Seitenwände (31), die imstande sind, wenigstens einen unteren Teil eines Drehgestells (2) zu umgeben, und
- einen ersten und einen zweiten Verankerungsbereich (51, 52; 65, 66; 83, 84), von denen jeder imstande ist, an einem Ende (11, 13) respektive einer ersten Karosserie (10) und einer zweiten Karosserie (12) eines Schienenfahrzeugs, die relativ zueinander gelenkig sind, befestigt zu werden in einer Konfiguration, in welcher diese erste und diese zweite Karosserie (10, 12) zumindest teilweise auf dem Drehgestell (2) aufliegen,
wobei die Verkleidung (3, 3', 3") **dadurch gekennzeichnet ist, dass** sie aufweist eine flexible Verbindung (4), welche den ersten Verankerungsbereich (51; 65; 83) und den zweiten Verankerungsbereich (52; 66; 84) mechanisch verbindet und welche eine Verlagerung dieses ersten und dieses zweiten Verankerungsbereichs relativ zueinander ermöglicht.

2. Verkleidung gemäß Anspruch 1, **dadurch gekennzeichnet, dass** die flexible Verbindung (4) aufweist ein Elastomer-Material, bevorzugt in Block- oder Band-Form.

3. Verkleidung (3) gemäß den Ansprüchen 1 oder 2, **dadurch gekennzeichnet, dass** sie ohne Freiheitsgrad an dem Drehgestell befestigt ist, dass der erste und der zweite Verankerungsbereich (51, 52) direkt an der flexiblen Verbindung (4) vorliegen und dass sich die flexible Verbindung an Umfangsabschnitten der Verkleidung erstreckt.

4. Verkleidung (3') gemäß den Ansprüchen 1 oder 2, **dadurch gekennzeichnet, dass** sie unterteilt ist in einen zentralen Abschnitt (60), der an dem Drehgestell (2) befestigt ist, und einen ersten (61, 62) und einen zweiten (63, 64) Umfangsabschnitt, dass der erste und der zweite Verankerungsbereich (65, 66) an dem ersten und dem zweiten Umfangsabschnitt vorliegen und dass sich die flexible Verbindung (4) zwischen dem zentralen Abschnitt und jedem von dem ersten und dem zweiten Umfangsabschnitt erstreckt und den zentralen Abschnitt mit jedem von dem ersten und dem zweiten Umfangsabschnitt verbindet.

5. Verkleidung (3") gemäß den Ansprüchen 1 oder 2, **dadurch gekennzeichnet, dass** sie unterteilt ist in einen vorderen Abschnitt (81) und einen hinteren Abschnitt (82), dass der erste und der zweite Verankerungsbereich (83, 84) respektive an dem vorderen und an dem hinteren Abschnitt vorliegen und dass sich die flexible Verbindung (4) zwischen dem vorderen Abschnitt und dem hinteren Abschnitt erstreckt und diesen vorderen und diesen hinteren Abschnitt miteinander verbindet.

6. Verkleidung (3; 3'; 3") gemäß irgendeinem der vorhergehenden Ansprüche, **dadurch gekennzeichnet, dass** die Verkleidung gemacht ist aus einem starren Material, wie einem Metall oder einem Verbundmaterial oder aus Kevlar, oder einem hochfesten Glas oder einem transparenten Kunststoffmaterial.

7. Verkleidung (3, 3', 3") gemäß irgendeinem der vorhergehenden Ansprüche, **dadurch gekennzeichnet, dass** es Öffnungen (32, 33, 34, 35) aufweist, die den Durchgang von Elementen des Drehgestells (2) ermöglichen.

8. Verkleidung (3, 3', 3") gemäß irgendeinem der vorhergehenden Ansprüche, **dadurch gekennzeichnet, dass** die flexible Verbindung (4) an der Verkleidung (3, 3', 3") mittels Durchgangs-Befestigungselementen (40), wie Bolzen, befestigt ist.

9. Verkleidung (3; 3'; 3") gemäß irgendeinem der vorhergehenden Ansprüche, **dadurch gekennzeichnet, dass** die flexible Verbindung (4) an der Verkleidung (3, 3', 3") befestigt ist durch Klemmen, z.B. mittels einer Klemmbacke (40), die an der Verkleidung vorliegt.

10. Gelenkiges Schienen-Fahrzeug (1), aufweisend:
- eine erste (10) und eine zweite (12) Karosserie, die relativ zueinander gelenkig sind,
- ein Drehgestell (2), auf welchem zumindest teilweise die erste und die zweite Karosserie aufliegen,
- eine Verkleidung (3; 3', 3") des Drehgestells, die aufweist:
∘ eine Bodenwand (30) und Seitenwände (31), die wenigstens einen unteren Teil des Drehgestells (2) umgeben, und
∘ Verankerungsbereiche (51, 52; 65, 66; 83, 84), von denen jeder an einem Ende (11, 13) respektive der ersten Karosserie (10) und der zweiten Karosserie (12) befestigt ist, wobei diese erste und diese zweite Karosserie zumindest teilweise auf dem Drehgestell (2) aufliegen,
wobei dieses Fahrzeug (1) **dadurch gekennzeichnet ist, dass** die Verkleidung (3; 3'; 3") gemäß irgendeinem der vorhergehenden Ansprüche ist.

## Claims

1. A fairing (3; 3'; 3") for an articulated railway vehicle (1) bogie (2), this fairing including:
- a bottom wall (30) and side walls (31) able to surround at least a lower part of a bogie (2), and
- first and second anchoring zones (51, 52; 65, 66; 83, 84) each able to be fastened to one end (11, 13), respectively, of a first body (10) and a second body (12) of a railway vehicle that are articulated relative to one another, in a configuration where these first and second bodies (10, 12) rest at least partially on the bogie (2),
this fairing (3; 3'; 3") being **characterized in that** it includes a flexible connector (4) that mechanically links the first anchoring zone (51; 65; 83) and the second anchoring zone (52; 66; 84) and that authorizes a movement of these first and second anchoring zones relative to one another.

2. The fairing according to claim 1, **characterized in that** the flexible connector (4) includes an elastomeric material, preferably in the form of a block or strip.

3. The fairing (3) according to claims 1 or 2, **characterized in that** it is fastened to the bogie with no degree of freedom, **in that** the first and second anchoring zones (51, 52) are arranged directly on the flexible connector (4), and **in that** the flexible connector extends over peripheral portions of the fairing.

4. The fairing (3') according to claims 1 or 2, **characterized in that** it is split between a central portion (60) fastened to the bogie (2), and first (61, 62) and second (63, 64) peripheral portions, **in that** the first and second anchoring zones (65, 66) are arranged on the first and second peripheral portions, and **in that** the flexible connector (4) extends between the central portion and each of the first and second peripheral portions and connects the central portion to each of the first and second peripheral portions.

5. The fairing (3") according to claims 1 or 2, **characterized in that** it is split into a front portion (81) and a rear portion (82), **in that** the first and second anchoring zones (83, 84) are arranged on the first and second portions, and **in that** the flexible connector (4) extends between the front and rear portions and connects these front and rear portions to one another.

6. The fairing (3; 3'; 3") according to any one of the preceding claims, **characterized in that** the fairing is made from a rigid material, such as metal or a composite material or Kevlar, or a high-strength glass or a transparent plastic material.

7. The fairing (3; 3'; 3") according to any one of the preceding claims, **characterized in that** it includes openings (32, 33, 34, 35) allowing elements of the bogie (2) to pass.

8. The fairing (3; 3'; 3") according to any one of the preceding claims, **characterized in that** the flexible connector (4) is fastened to the fairing (3; 3'; 3") using through fastening elements (40), such as bolts.

9. The fairing (3; 3'; 3") according to any one of the preceding claims, **characterized in that** the flexible connector (4) is fastened to the fairing (3; 3'; 3") by gripping, for example using a clamp (40) arranged on the fairing.

10. An articulated railway vehicle (1), including:
- first (10) and second (12) bodies articulated relative to one another,
- a bogie (2) on which the first and second bodies rest at least partially,
- a fairing (3; 3'; 3") of the bogie, comprising:
∘ a bottom wall (30) and side walls (31) surrounding at least a lower part of the bogie (2), and
∘ anchoring zones (51, 52; 65, 66; 83, 84) each able to be fastened to one end (11, 13), respectively, of the first body (10) and the second body (12), these first and second bodies resting at least partially on the bogie (2),
this vehicle (1) being **characterized in that** the fairing (3; 3'; 3") is according to any one of the preceding claims.
